# EUROPEAN PATENT APPLICATION

(11) **EP 4 847 812 A1**
(43) Date of publication of application: **02.12.2026**
(21) Application number: 25744934.8
(22) Date of filing: 17.01.2025
(51) Int. Cl.: F16K 17/06

(54) **ELECTROMAGNETIC RELIEF VALVE**

(30) Priority: 22.01.2024 JP 2024007365
(71) Applicant: KYB Corporation, Minato-ku, Tokyo 105-5128 (JP)
(72) Inventor: TANAKA, Yuta, Tokyo 105-5128 (JP)
(74) Representative: Grünecker Patent- und Rechtsanwälte PartG mbB
(86) International application number: PCT/JP2025/001250
(87) International publication number: WO 2025/159005

(57) **Abstract**

An electromagnetic relief valve (100) includes: a pilot poppet (20) configured to allow or shut off communication between a high-pressure side passage (HP) and a low-pressure side passage (LP); a valve body chamber (VS) configured to accommodate the pilot poppet (20); and a solenoid portion (S) configured to bias the pilot poppet (20) in the valve closing direction. The solenoid portion (S) has: a plunger (72); a rod (73); a spring (74) configured to bias the pilot poppet (20) in the valve closing direction; and a plunger chamber (76) configured to accommodate the plunger (72). A partition member (90) configured to partition the valve body chamber (VS) from the plunger chamber (76) is provided between the valve body chamber (VS) and the plunger chamber (76), the partition member (90) having a through hole (60d) through which the rod (73) penetrates, and an annular restrictor (C) is provided between the through hole (60d) of the partition member (90) and the rod (73).

## Description

### TECHNICAL FIELD

The present invention relates to an electromagnetic relief valve.

### BACKGROUND ART

JP2022-12406A discloses an electromagnetic relief valve that prevents a pressure of working oil in a high-pressure passage from becoming abnormally high by being opened when the pressure of the working oil in the high-pressure passage reaches a set pressure to allow the working oil to escape from the high-pressure passage to a low-pressure passage.

The electromagnetic relief valve described in JP2022-12406A includes a solenoid portion that makes it possible to change the set pressure.

### SUMMARY OF INVENTION

The electromagnetic relief valve described in JP2022-12406A is inspected at the time of shipment, transported, and then attached to hydraulic equipment such as a valve block. At this time, in the electromagnetic relief valve described in JP2022-12406A, effects of vibration during transportation may cause air to enter the inside of the valve, and the air may be trapped in a spring chamber in which a spring, which biases a plunger of the solenoid portion, is accommodated.

In this state, when a pilot poppet is opened, if the pressure on the low-pressure side (the relief side) fluctuates, the pressure fluctuation acts on the plunger and the plunger is moved. At this time, if air is trapped, the air is expanded and compressed as the plunger is moved, and therefore a deviation arises between the pressure fluctuation and the operation of the plunger, and there is a risk that the operation of the electromagnetic relief valve becomes unstable.

An object of the present invention is to provide an electromagnetic relief valve that operates stably even when air enters the electromagnetic relief valve.

According to an aspect of the present invention, an electromagnetic relief valve of an inverse proportional type includes: a valve body configured to allow or shut off communication between a high-pressure side passage and a low-pressure side passage; a valve body chamber communicated with the low-pressure side passage, the valve body chamber being configured to accommodate the valve body; and a solenoid portion configured to bias the valve body in a valve closing direction, wherein the solenoid portion has: a plunger; a rod fixed to the plunger, the rod having a tip end extending to the valve body chamber and coming into contact with the valve body; a biasing member configured to bias the valve body in the valve closing direction via the rod; a coil configured to generate a magnetic field and impart a counterforce opposing a biasing force of the biasing member to the plunger when electric current is applied; and a plunger chamber provided on an inner side of the coil, the plunger chamber being configured to accommodate the plunger, a partition member configured to partition the valve body chamber from the plunger chamber is provided between the valve body chamber and the plunger chamber, the partition member having a through hole through which the rod penetrates, and an annular restrictor is provided between an inner peripheral surface of the through hole of the partition member and an outer peripheral surface of the rod.

### BRIEF DESCRIPTION OF DRAWINGS

[FIG. 1] FIG. 1 is a sectional view of an electromagnetic relief valve according to an embodiment of the present invention.
[FIG. 2] FIG. 2 is an enlarged sectional view of a vicinity of an annular restrictor C of the electromagnetic relief valve according to the embodiment of the present invention.

### DESCRIPTION OF EMBODIMENTS

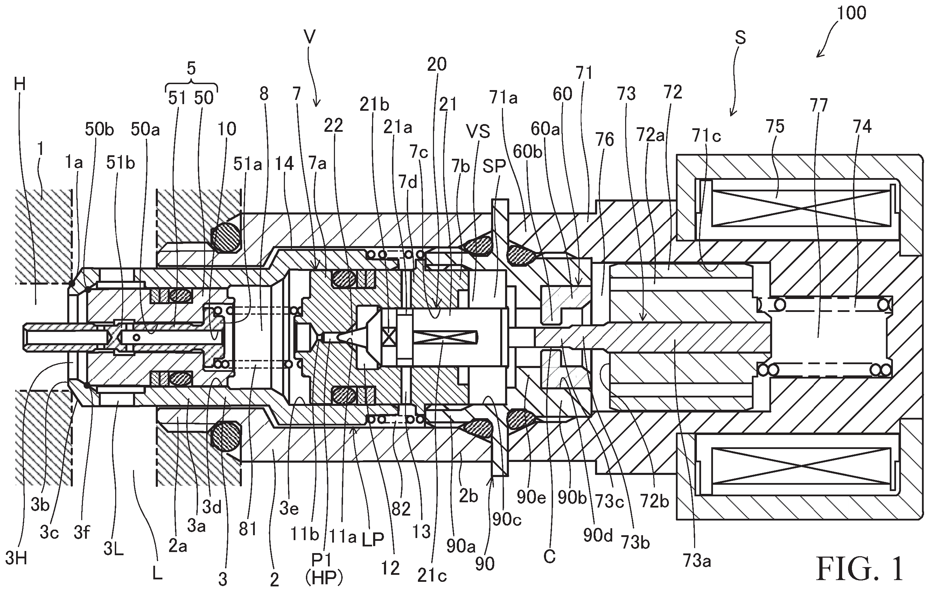

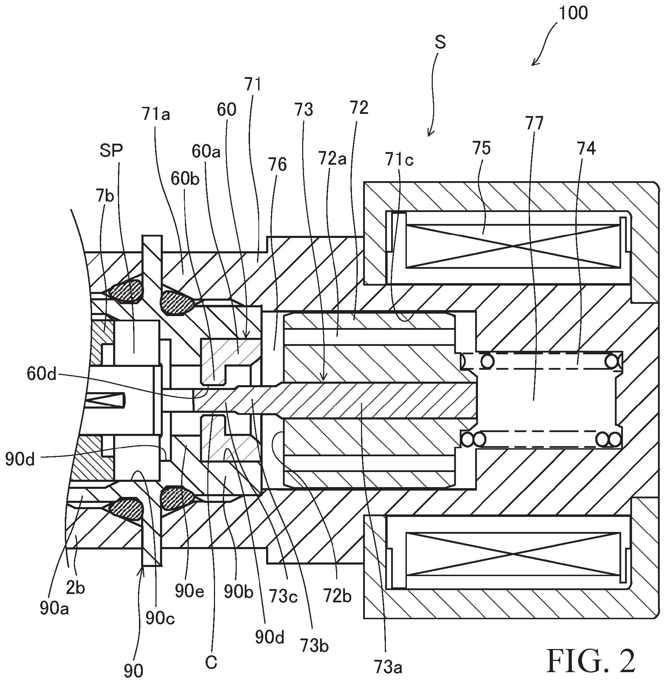

An electromagnetic relief valve 100 according to an embodiment of the present invention will be described with reference to FIGs. 1 and 2. FIG. 1 is a sectional view of the electromagnetic relief valve 100 according to this embodiment. FIG. 2 is an enlarged sectional view of a vicinity of an annular restrictor C of the electromagnetic relief valve 100 according to this embodiment.

The electromagnetic relief valve 100 is an electromagnetic relief valve of an inverse proportional type. The term "inverse proportional type" refers to a relief valve that is configured such that a relief pressure is decreased as the current value applied to a solenoid is increased.

The electromagnetic relief valve 100 is opened when the pressure of working oil in a high-pressure passage H reaches a set pressure (the relief pressure), and prevents the pressure of the working oil in the high-pressure passage H from becoming abnormally high by allowing the working oil to escape from the high-pressure passage H to a low-pressure passage L. In addition, the electromagnetic relief valve 100 has an anti-void function and prevents the occurrence of cavitation by being opened when the high-pressure passage H becomes negative pressure and by supplying the working oil from the low-pressure passage L to the high-pressure passage H.

As shown in FIG. 1, the electromagnetic relief valve 100 is attached to an apparatus main body 1 by screw fastening. The apparatus main body 1 is a main body of hydraulic equipment such as a hydraulic cylinder, a hydraulic pump, a hydraulic motor, a valve block having a plurality of valves, and so forth. In this embodiment, a case in which the working oil is used as a working fluid for the apparatus main body 1 will be described as an example, but the working fluid may be other liquid such as working water, etc.

The high-pressure passage H and the low-pressure passage L are provided in the apparatus main body 1 with the electromagnetic relief valve 100 as a boundary. In the apparatus main body 1, a seat portion 1a serving as a first valve seat, on which a suction poppet 3, which will be described later, is seated, is provided between the high-pressure passage H and the low-pressure passage L. Note that, the apparatus main body 1 is not limited to the main body of the hydraulic equipment, and may be a block body installed between respective hydraulic equipment.

As shown in FIG. 1, the electromagnetic relief valve 100 includes a valve portion V that allows or shuts off the communication between the high-pressure passage H and the low-pressure passage L, and a solenoid portion S that adjusts the set pressure (the relief pressure).

As shown in FIG. 1, the valve portion V includes: a housing 2 that is attached to the apparatus main body 1 in which the high-pressure passage H and the low-pressure passage L are provided; a suction poppet 3 serving as a first valve body that is provided in the housing 2 and that allows or shuts off the communication between the high-pressure passage H and the low-pressure passage L by being separated from the seat portion 1a or being seated onto the seat portion 1a; a main poppet 5 serving as a second valve body that is provided in the suction poppet 3 and that allows or shuts off the communication between the high-pressure passage H and the low-pressure passage L by being separated from a seat portion 3f serving as a second valve seat that is formed on the suction poppet 3, or being seated onto the seat portion 3f; a back pressure chamber 8 that is formed in the suction poppet 3 to which the working oil for biasing the main poppet 5 in the valve closing direction is guided from the high-pressure passage H; a sleeve 7 that partitions the back pressure chamber 8 with the main poppet 5; a pilot passage 10 that is provided in the main poppet 5 and allows communication between the high-pressure passage H and the back pressure chamber 8; a drain chamber 12 that is provided in the sleeve 7 and to which the working oil in the back pressure chamber 8 is discharged; a first communicating passage P1 that is provided in the sleeve 7 and allows communication between the drain chamber 12 and the back pressure chamber 8; and a pilot poppet 20 serving as a third valve body that is provided in the sleeve 7 and opens and closes the first communicating passage P1.

As shown in FIG. 1, the housing 2 is a member formed to have a cylindrical shape having a first cylindrical portion 2a that is attached to the apparatus main body 1 and a second cylindrical portion 2b that is connected to a connecting member 90 on the opposite side from the first cylindrical portion 2a. The housing 2 is connected to a solenoid housing 71 of the solenoid portion S by the connecting member 90. The housing 2 and the solenoid housing 71 of this embodiment correspond to the "valve housing" in the scope of claims.

The suction poppet 3 is a member that is formed to have a bottomed cylindrical shape having a cylindrical portion 3a and a bottom portion 3b. The suction poppet 3 is provided in the housing 2 so as to be movable in the axial direction, and a part thereof projects out from an opening of the first cylindrical portion 2a of the housing 2. A high-pressure port 3H communicating with the high-pressure passage H is provided in the bottom portion 3b of the suction poppet 3, and a low-pressure port 3L communicating with the low-pressure passage L is provided in the vicinity of the bottom portion 3b of the cylindrical portion 3a.

A corner portion 3c formed between the cylindrical portion 3a and the bottom portion 3b of the suction poppet 3 is formed to have a tapered shape, and when the corner portion 3c is seated onto the seat portion 1a of the apparatus main body 1, the communication between the high-pressure passage H and the low-pressure passage L between the apparatus main body 1 and the suction poppet 3 is shut off. On the bottom portion 3b side of the suction poppet 3, a first accommodating hole 3d, in which the main poppet 5 is accommodated, is provided, and at an end portion on the opposite side from the bottom portion 3b, a second accommodating hole 3e that has a larger diameter than the first accommodating hole 3d and in which the sleeve 7 is accommodated is provided.

The main poppet 5 has a body portion 50 that is capable of sliding inside the first accommodating hole 3d and a pilot piston 51 that is capable of sliding inside a sliding hole 50a that is formed so as to penetrate through the body portion 50 in the axial direction.

The body portion 50 has a valve portion 50b that is seated onto the seat portion 3f that is formed on the inner side of the corner portion 3c of the suction poppet 3. When the valve portion 50b is seated onto the seat portion 3f, the communication between the high-pressure passage H and the low-pressure passage L between the suction poppet 3 and the main poppet 5 is shut off. A seal member (an O-ring) that seals a gap between the body portion 50 and the suction poppet 3 is provided between an outer peripheral surface of the body portion 50 and an inner peripheral surface of the suction poppet 3.

The pilot piston 51 has: a flange portion 51a that is provided so as to face the back pressure chamber 8, which is a space defined by the inner peripheral surface of the suction poppet 3, the main poppet 5, and the sleeve 7; and a columnar shaft portion 51b that extends from the flange portion 51a in the axial direction and that is inserted into the sliding hole 50a. A tip end portion of the shaft portion 51b projects out from a tip end surface of the body portion 50 facing the high-pressure passage H. In addition, the pilot piston 51 includes the pilot passage 10 that allows communication between the high-pressure passage H and the back pressure chamber 8. The pilot passage 10 includes a restrictor that applies resistance to the working oil flowing through the pilot passage 10.

The sleeve 7 has: a tip end portion 7a that is inserted into the suction poppet 3; a base-end portion 7b that is connected to the connecting member 90; an accommodating hole 7c that opens at an axial end portion on the opposite side from the tip end portion 7a; and an intermediate portion 7d that is provided between the tip end portion 7a and the base-end portion 7b and that has an exposed outer peripheral surface between the suction poppet 3 and the connecting member 90. The sleeve 7 slidably supports the suction poppet 3 at the tip end portion 7a. A seal member (an O-ring) that seals a gap between the sleeve 7 and the suction poppet 3 is provided between an outer peripheral surface of the tip end portion 7a of the sleeve 7 and the inner peripheral surface of the suction poppet 3.

In addition, the sleeve 7 is formed with: the first communicating passage P1 that has one end opening to the back pressure chamber 8 and the other end opening to a bottom surface of the accommodating hole 7c and that allows communication between the back pressure chamber 8 and the accommodating hole 7c; and a drain passage 13 that has one end opening to the inner peripheral surface of the accommodating hole 7c and the other end opening to the outer peripheral surface of the intermediate portion 7d.

A seat portion 11a, onto and from which a valve portion 22 of the pilot poppet 20 is seated and separated, is provided at an opening end of the first communicating passage P1 that opens to the accommodating hole 7c. The seat portion 11a is formed coaxially with the accommodating hole 7c such that the central axis thereof coincides with the central axis of the accommodating hole 7c. In addition, a restrictor 11b that applies resistance to a flow of the working oil flowing through the first communicating passage P1 is provided on the first communicating passage P1 between the seat portion 11a and the back pressure chamber 8. Note that, in this embodiment, the first communicating passage P1 serves as a "high-pressure side passage HP" in the scope of claims.

The drain chamber 12 is a space defined by the accommodating hole 7c and the pilot poppet 20.

The drain passage 13 is constantly communicated with the drain chamber 12 and the low-pressure passage L through a gap 14 between the outer peripheral surface of the suction poppet 3 and the inner peripheral surface of the housing 2. Note that, in this embodiment, the drain chamber 12 and the passage from the drain chamber 12 to the low-pressure passage L serve as a "low-pressure side passage LP" in the scope of claims.

As shown in FIG. 1, the pilot poppet 20 is a member formed to have a substantially columnar shape and is accommodated in the accommodating hole 7c of the sleeve 7. The pilot poppet 20 has a body portion 21 that is slidably supported in the accommodating hole 7c and the valve portion 22 that is formed to have a conical shape projecting from the body portion 21 in the axial direction.

The body portion 21 of the pilot poppet 20 includes: an annular groove 21a that is formed so as to be constantly communicated with the drain passage 13; a first cut-out portion 21b that is formed along the axial direction from the annular groove 21a toward the valve portion 22 side; and a second cut-out portion 21c that is formed along the axial direction from the annular groove 21a toward the solenoid portion S side.

The first cut-out portion 21b is formed by cutting the outer peripheral surface of the body portion 21 in a planar shape. The drain chamber 12 is communicated with the low-pressure passage L through a passage defined by the inner peripheral surface of the accommodating hole 7c and the first cut-out portion 21b, the annular groove 21a, the drain passage 13, and the gap 14. The passage defined by the inner peripheral surface of the accommodating hole 7c and the first cut-out portion 21b also functions as a first restrictor that applies resistance to the working oil discharged from the back pressure chamber 8 to the low-pressure passage L.

In addition, the second cut-out portion 21c is formed by cutting the outer peripheral surface of the body portion 21 in a planar shape along the axial direction from the annular groove 21a toward the solenoid portion S side such that an end portion of the second cut-out portion 21c on the solenoid portion S side is constantly exposed from the accommodating hole 7c. A space SP in an accommodating hole 90c of the connecting member 90, in which the rear end side of the pilot poppet 20 is exposed, is communicated with the low-pressure passage L through a passage defined by the inner peripheral surface of the accommodating hole 7c and the second cut-out portion 21c, the annular groove 21a, the drain passage 13, and the gap 14. Note that, hereinafter, the space formed by the accommodating hole 7c of the sleeve 7, the space SP, and the region in a communicating hole 90d on the space SP side relative to a reduced-diameter portion 60b is referred to as a valve body chamber VS that accommodates the pilot poppet 20.

The thus-formed pilot poppet 20 is slidably supported by the accommodating hole 7c that is formed coaxially with the seat portion 11a. In other words, the pilot poppet 20 is supported by the accommodating hole 7c such that the central axis thereof is not inclined with respect to the central axis of the seat portion 11a. As described above, by suppressing the pilot poppet 20 from being inclined with respect to the seat portion 11a, when the valve portion 22 is seated onto the seat portion 11a, the valve portion 22 is prevented from coming into contact with the seat portion 11a in an uneven manner. Thus, damage or deformation of the seat portion 11a is suppressed, and as a result, it is possible to improve a seating performance when the valve portion 22 is seated onto the seat portion 11a.

Note that, the annular groove 21a is formed on the outer peripheral surface of the body portion 21 of the pilot poppet 20, but instead of this configuration, the annular groove 21a may be formed on the inner peripheral surface of the accommodating hole 7c. In addition, the first cut-out portion 21b and the second cut-out portion 21c are formed on the outer peripheral surface of the body portion 21 of the pilot poppet 20, but instead of this configuration, the first cut-out portion 21b and the second cut-out portion 21c may be formed as grooves extending in the axial direction on the inner peripheral surface of the accommodating hole 7c.

As shown in FIG. 1, a spring 81 is provided between the flange portion 51a of the pilot piston 51 and the sleeve 7, and a spring 82 is provided between the suction poppet 3 and the connecting member 90. The spring 81 biases the pilot piston 51 such that the flange portion 51a abuts against the body portion 50 of the main poppet 5, and biases the body portion 50 via the flange portion 51a such that the body portion 50 is seated onto the seat portion 3f of the suction poppet 3. On the other hand, the spring 82 biases the suction poppet 3 such that the corner portion 3c of the suction poppet 3 is seated onto the seat portion 1a of the apparatus main body 1.

Next, the solenoid portion S will be described with reference to FIGs. 1 and 2.

The solenoid portion S has: a plunger 72 that is slidably accommodated in the solenoid housing 71; a rod 73 that is fixed to the plunger 72 and has a tip end that comes into contact with the pilot poppet 20; a spring 74 serving as a biasing member that is engaged in the solenoid housing 71 and biases the plunger 72 toward the pilot poppet 20 side; a coil 75 that is accommodated in the solenoid housing 71 and applies, to the plunger 72, a counterforce opposing the biasing force exerted by the spring 74; and a plunger chamber 76 that is provided on the inner side of the coil 75 and in which the plunger 72 is accommodated.

The solenoid housing 71 is a bottomed cylindrical member in which an accommodating hole 71c for accommodating the plunger 72 is formed so as to open on the side of an end portion 71a, and the end portion 71a side of the solenoid housing 71 is connected to the connecting member 90.

The biasing force exerted by the spring 74 acts so as to bias the pilot poppet 20 in the valve closing direction via the plunger 72 and the rod 73 that is fixed to the plunger 72. In other words, the spring 74 biases the pilot poppet 20 such that the valve portion 22 of the pilot poppet 20 is seated onto the seat portion 11a.

When electric current is applied, the coil 75 generates a magnetic field and applies, to the plunger 72, a thrust force opposing the biasing force exerted by the spring 74. As the electric current applied to the coil 75 is increased, the thrust force opposing the biasing force exerted by the spring 74 is increased. As a result, the biasing force exerted by the spring 74 acting on the pilot poppet 20 via the plunger 72 and the rod 73 is decreased. As a result, the pressure required to separate the valve portion 22 of the pilot poppet 20 from the seat portion 11a, the so-called cracking pressure, is decreased. In the electromagnetic relief valve 100, by controlling the electric current applied to the coil 75 to change the biasing force from the spring 74 acting on the pilot poppet 20, it is possible to change the set pressure (the relief pressure) at which the pilot poppet 20 is opened.

The plunger chamber 76 is formed by the accommodating hole 71c that accommodates the plunger 72 and a spring chamber 77 serving as a biasing member chamber that is formed continuously with the accommodating hole 71c and in which the spring 74 is accommodated.

The connecting member 90 is a member formed to have a cylindrical shape and connects the housing 2 and the solenoid housing 71. The connecting member 90 has: a first joint portion 90a to which the housing 2 is connected; a second joint portion 90b to which the solenoid housing 71 is connected; the accommodating hole 90c that is provided inside the first joint portion 90a; the communicating hole 90d that communicates with the accommodating hole 90c and that is formed so as to penetrate through the inside of the second joint portion 90b in the axial direction; and an annular protruding portion 90e that projects radially inward from the inner peripheral surface of the communicating hole 90d. The base-end portion 7b of the sleeve 7 is connected to the accommodating hole 90c, and a part of the pilot poppet 20 projecting from the sleeve 7 is accommodated in the accommodating hole 90c. In addition, in a state in which the solenoid housing 71 is connected to the connecting member 90, the rod 73 is inserted into the communicating hole 90d.

The spring chamber 77 formed in the solenoid housing 71 is communicated with the low-pressure passage L through a through hole 72a that penetrates through the plunger 72 in the axial direction, the communicating hole 90d and the accommodating hole 90c (the space SP) of the connecting member 90, the passage that is defined by the inner peripheral surface of the accommodating hole 7c and the second cut-out portion 21c, the annular groove 21a, the drain passage 13, and the gap 14.

A restrictor member 60 that forms the annular restrictor C with the outer peripheral surface of the rod 73 is provided in the communicating hole 90d of the connecting member 90. The restrictor member 60 has: a cylindrical body portion 60a that is fitted into the communicating hole 90d; and the cylindrical reduced-diameter portion 60b that is formed so as to project radially inward from the body portion 60a. The restrictor member 60 is inserted into the communicating hole 90d so as to abut against a side surface of the protruding portion 90e. The restrictor member 60 and the connecting member 90 also function as a partition member that partitions the valve body chamber VS formed in the valve housing (the housing 2 and the solenoid housing 71) from the plunger chamber 76. Note that, the restrictor member 60 corresponds to the "partition member" and the "first partition member" in the scope of claims, and the connecting member 90 corresponds to the "partition member" and the "second partition member" in the scope of claims.

It is preferable that the space between the communicating hole 90d and the restrictor member 60 be sealed. For example, it is preferable that the side surface of the protruding portion 90e and the end surface of the restrictor member 60 form a face seal, or that a separate seal member be provided between the side surface of the protruding portion 90e and the end surface of the restrictor member 60.

The rod 73 has: a fixed portion 73a that is fixed to the plunger 72; a connecting portion 73b that is provided continuously with the fixed portion 73a and has a smaller diameter than the fixed portion 73a; and a penetrating portion 73c that is provided continuously with the connecting portion 73b and has a smaller diameter than the connecting portion 73b. The penetrating portion 73c is formed so as to be inserted through a through hole 60d (see FIG. 2), which is formed in the reduced-diameter portion 60b, and so that the tip end thereof is positioned on the valve body chamber VS (the space SP) side relative to the reduced-diameter portion 60b.

Next, the operation of the electromagnetic relief valve 100 will be described.

The working oil in the high-pressure passage H is guided to the first communicating passage P1 through the pilot passage 10 and the back pressure chamber 8. When the pressure of the working oil guided to the first communicating passage P1 reaches the set pressure (the cracking pressure) of the pilot poppet 20 set by the solenoid portion S, the pressure of the working oil causes the valve portion 22 of the pilot poppet 20 to be separated from the seat portion 11a.

When the valve portion 22 of the pilot poppet 20 is separated from the seat portion 11a, the working oil in the back pressure chamber 8 is discharged to the low-pressure passage L through the first communicating passage P1, the gap between the valve portion 22 and the seat portion 11a, and the low-pressure side passage LP.

The working oil is constantly supplied from the high-pressure passage H to the back pressure chamber 8 through the pilot passage 10. However, the supply of the working oil from the high-pressure passage H to the back pressure chamber 8 is limited by the restrictor provided in the pilot passage 10. Therefore, when the valve portion 22 is separated from the seat portion 11a and the working oil in the back pressure chamber 8 is discharged, the pressure in the back pressure chamber 8 gradually becomes lower than the pressure in the high-pressure passage H.

As described above, when the pressure in the back pressure chamber 8 is decreased, the biasing force generated by the pressure in the back pressure chamber 8 acting in the direction, in which the body portion 50 of the main poppet 5 is seated onto the seat portion 3f of the suction poppet 3, is decreased. Then, when the pressure difference between the pressure in the back pressure chamber 8 and the pressure in the high-pressure passage H exceeds a preset pressure difference, the body portion 50 of the main poppet 5 is separated from the seat portion 3f of the suction poppet 3, and the main poppet 5 is opened. As a result, the working oil is discharged from the high-pressure passage H to the low-pressure passage L, and the pressure in the high-pressure passage H is prevented from becoming abnormally high.

Incidentally, air may enter the electromagnetic relief valve 100 while the electromagnetic relief valve 100 configured in this way is being transported. In the electromagnetic relief valve 100 of the inverse proportional type, as in this embodiment, in which the set pressure (the relief pressure) is increased as the amount of the electric current applied to the coil 75 is increased, during a relief operation, when the pilot poppet 20 is opened and moves, the plunger 72 is also moved accordingly and the volume of the spring chamber 77 is reduced.

At this time, when the working oil is discharged from the high-pressure passage H to the low-pressure passage L, the pressure of the working oil in the low-pressure passage L may increase. When the pressure of the working oil in the low-pressure passage L propagates to the valve body chamber VS through the low-pressure side passage LP, the working oil with increased pressure also acts on an end surface 72b of the plunger 72 through the communicating hole 90d of the connecting member 90, causing the plunger 72 to move toward the spring chamber 77 side. In this manner, when the plunger 72 moves toward the spring chamber 77 side, if air is trapped in the spring chamber 77, the air is compressed and the plunger 72 is displaced excessively. In other words, when air is trapped in the spring chamber 77, the air is expanded and compressed as the plunger 72 is moved, and therefore a deviation arises between the pressure fluctuation and the operation of the plunger 72, and there is a risk that the operation of the electromagnetic relief valve 100 becomes unstable.

Therefore, in this embodiment, the annular restrictor C is provided in the communicating hole 90d that allows the communication between the valve body chamber VS and the plunger chamber 76. With such a configuration, even if the pressure in the low-pressure side passage LP fluctuates, it is possible to suppress the propagation of the pressure fluctuation in the low-pressure side passage LP to the plunger chamber 76 by the restrictor C. When the propagation of the pressure fluctuation is suppressed in this manner, it is possible to suppress the fluctuation of the pressure acting on the end surface 72b of the plunger 72. As a result, it is possible to suppress the fluctuation of the pressure acting on the end surface 72b of the plunger 72.

In addition, although the propagation of the pressure fluctuation in the low-pressure side passage LP to the plunger chamber 76 is suppressed by the restrictor C, the pressure fluctuation acts on the penetrating portion 73c of the rod 73. As in this embodiment, by making the diameter of the penetrating portion 73c of the rod 73 smaller than the diameter of the fixed portion 73a of the rod 73, in other words, by making the pressure-receiving area of the penetrating portion 73c of the rod 73 on which the pressure fluctuation in the low-pressure side passage LP acts as small as possible, it is possible to reduce the fluctuation of the thrust force based on the pressure fluctuation acting on the plunger 72.

Therefore, according to the electromagnetic relief valve 100 of this embodiment, by making the diameter of the penetrating portion 73c of the rod 73 smaller than the diameter of the fixed portion 73a of the rod 73, it is possible to minimize the influence of the pressure fluctuation. Note that, the diameter of the penetrating portion 73c of the rod 73 is preferably as small as possible within a range in which a strength sufficient to continuously press the pilot poppet 20 can be ensured.

In addition, for example, when the flow-passage cross-sectional area of the annular restrictor C is set to a predetermined size, if the diameter of the penetrating portion 73c is small, compared to a case in which the diameter of the penetrating portion 73c is large, the difference from the inner diameter of the reduced-diameter portion 60b, that is, the clearance in the radial direction with the annular restrictor C, can be made larger. As a result, for example, it is possible to increase manufacturing or assembly tolerance, such as misalignment between the central axes of the penetrating portion 73c and the reduced-diameter portion 60b.

The configuration, operation, and effects of the embodiment of the present invention configured as described above will be collectively described.

The electromagnetic relief valve 100 includes: the pilot poppet 20 (the valve body) configured to allow or shut off communication between the high-pressure side passage HP (the first communicating passage P1) and the low-pressure side passage LP; the valve body chamber VS communicated with the low-pressure side passage LP, the valve body chamber VS being configured to accommodate the pilot poppet 20 (the valve body); and the solenoid portion S configured to bias the pilot poppet 20 (the valve body) in the valve closing direction, wherein the solenoid portion S has: the plunger 72; the rod 73 fixed to the plunger 72, the rod 73 having the tip end extending to the valve body chamber VS and coming into contact with the pilot poppet 20 (the valve body); the spring 74 (the biasing member) configured to bias the pilot poppet 20 (the valve body) in the valve closing direction via the rod 73; the coil 75 configured to generate a magnetic field and impart the counterforce opposing the biasing force of the spring 74 (the biasing member) to the plunger 72 when electric current is applied; and the plunger chamber 76 provided on the inner side of the coil 75, the plunger chamber 76 being configured to accommodate the plunger 72, the partition member (the restrictor member 60 and the connecting member 90) configured to partition the valve body chamber VS from the plunger chamber 76 is provided between the valve body chamber VS and the plunger chamber 76, the partition member having the through hole 60d through which the rod 73 penetrates, and the annular restrictor C is provided between the inner peripheral surface of the through hole 60d of the partition member (the restrictor member 60 and the connecting member 90) and the outer peripheral surface of the rod 73.

With this configuration, because the annular restrictor C is provided between the valve body chamber VS and the plunger chamber 76, when the pressure in the low-pressure side passage LP fluctuates, it is possible to suppress the propagation of the pressure fluctuation from the valve body chamber VS to the plunger chamber 76. As a result, even if air enters the spring chamber 77, the electromagnetic relief valve 100 can operate stably.

In addition, in the electromagnetic relief valve 100, the rod 73 has: the fixed portion 73a fixed to the plunger 72; and the penetrating portion 73c formed to have a smaller diameter than the fixed portion 73a, the penetrating portion 73c penetrating the through hole 60d.

With this configuration, by forming the penetrating portion 73c of the rod 73 to have a smaller diameter, compared to a case in which a rod with a larger diameter is used to form an annular restrictor with the same flow-passage cross-sectional area, it is possible to increase the clearance between the inner peripheral surface of the through hole 60d of the partition member (the restrictor member 60) and the outer peripheral surface of the rod 73. As a result, because manufacturing or assembly tolerance is increased, it is possible to improve productivity and to reduce production costs.

In addition, the electromagnetic relief valve 100 further includes the housing 2 and the solenoid housing 71 (the valve housing) inside of which the valve body chamber VS and the plunger chamber 76 are formed, wherein the partition member has: the restrictor member 60 (the first partition member) in which the through hole 60d is formed; and the connecting member 90 (the second partition member) configured to support the restrictor member 60 (the first partition member), the connecting member 90 (the second partition member) being attached to the housing 2 and the solenoid housing 71 (the valve housing).

With this configuration, by forming the through hole 60d, which requires high machining precision, and other parts as separate members, it is possible to reduce costs.

In addition, in the electromagnetic relief valve 100, the gap between the restrictor member 60 (the first partition member) and the connecting member 90 (the second partition member) is sealed.

With this configuration, there is no leakage between the restrictor member 60 (the first partition member) and the connecting member 90 (the second partition member), and the fluid passes only through the annular restrictor C. As a result, it is possible to suppress the influence of the leakage on the operation of the electromagnetic relief valve 100.

Embodiments of this invention were described above, but the above embodiments are merely examples of applications of this invention, and the technical scope of this invention is not limited to the specific constitutions of the above embodiments.

For example, the restrictor member 60 and the connecting member 90 may be formed integrally. In addition, in the above-described embodiment, the connecting portion 73b is provided between the fixed portion 73a and the penetrating portion 73c; however, it is not necessarily required to provide the connecting portion 73b.

In addition, in the above-described embodiment, a case in which the electromagnetic relief valve 100 includes the suction poppet 3 has been described as an example; however, the electromagnetic relief valve 100 may not include the suction poppet 3.

In the above-described embodiment, a case in which the connecting member 90 connecting the housing 2 and the solenoid housing 71 serves as the second partition member has been described as an example; however, the present invention is not limited thereto. For example, a member that is fixed to only one of the housing 2 and the solenoid housing 71 may also be used as the partition member.

The present application claims priority based on Japanese Patent Application No. 2024-7365 filed with the Japan Patent Office on January 22, 2024, and the entire contents of which are incorporated herein by reference.

## Claims

1. An electromagnetic relief valve of an inverse proportional type comprising:
a valve body configured to allow or shut off communication between a high-pressure side passage and a low-pressure side passage;
a valve body chamber communicated with the low-pressure side passage, the valve body chamber being configured to accommodate the valve body; and
a solenoid portion configured to bias the valve body in a valve closing direction, wherein
the solenoid portion has:
a plunger;
a rod fixed to the plunger, the rod having a tip end extending to the valve body chamber and coming into contact with the valve body;
a biasing member configured to bias the valve body in the valve closing direction via the rod;
a coil configured to generate a magnetic field and impart a counterforce opposing a biasing force of the biasing member to the plunger when electric current is applied; and
a plunger chamber provided on an inner side of the coil, the plunger chamber being configured to accommodate the plunger,
a partition member configured to partition the valve body chamber from the plunger chamber is provided between the valve body chamber and the plunger chamber, the partition member having a through hole through which the rod penetrates, and
an annular restrictor is provided between an inner peripheral surface of the through hole of the partition member and an outer peripheral surface of the rod.

2. The electromagnetic relief valve according to Claim 1, wherein
the rod has:
a fixed portion fixed to the plunger; and
a penetrating portion formed to have a smaller diameter than the fixed portion, the penetrating portion penetrating the through hole.

3. The electromagnetic relief valve according to Claim 1 or 2, further comprising
a valve housing inside of which the valve body chamber and the plunger chamber are formed, wherein
the partition member has:
a first partition member in which the through hole is formed; and
a second partition member configured to support the first partition member, the second partition member being attached to the valve housing.

4. The electromagnetic relief valve according to Claim 3, wherein
a gap between the first partition member and the second partition member is sealed.
